# EUROPEAN PATENT SPECIFICATION

(11) **EP 1 878 282 B1**
(45) Date of publication and mention of the grant of the patent: **04.01.2012**
(21) Application number: 05788430.6
(22) Date of filing: 29.09.2005
(51) Int. Cl.: H04W 48/04, H04M 1/725

(54) **CONTROLLING PORTABLE DIGITAL DEVICES**
STEUERUNG VON TRAGBAREN DIGITALEN GERÄTEN
REGULATION DE L'USAGE DE DISPOSITIFS NUMERIQUES PORTATIFS

(30) Priority: 30.09.2004 GB 0421678; 01.11.2004 US 623231
(43) Date of publication of application: 16.01.2008
(73) Proprietor: Rafe Communications LLC, Las Vegas NV 89119 (US)
(72) Inventor: SNOW, Patrick, Harefield Grove, Cheltenham GL50 2SF (GB); RAMSDALE, Peter, Saffron Walden, Essex CB11 3SQ (GB)
(74) Representative: Small, Gary James
(86) International application number: PCT/GB2005/003742
(87) International publication number: WO 2006/035231

(56) References cited:
- EP-A- 1 139 684
- EP-A- 1 445 923
- EP-A- 1 499 148
- WO-A-2004/089021
- US-A1- 2002 016 169
- US-A1- 2004 147 255

## Description

### TECHNICAL FIELD

This invention relates to portable digital devices, to methods for controlling such devices, to systems incorporating such devices and to software for use in such devices. The term "portable digital device" is used broadly to cover many different portable data recording and/or storage devices, such as for example mobile (cell) phones (including camera and video phones), internet-enabled imaging devices (e.g. a digital camera with GPRS (Global Packet Radio Service), PDAs (Personal Digital Assistants), digital cameras, video cameras or MP3 players with or without camera modules. Such devices may use communication methods such as, but not limited to GPRS (Global Packet Radio Service), Bluetooth, WLAN, GSM, CDMA, UMTS, infra-red and SIM update, WAP, 3G or combinations thereof.

### TECHNICAL BACKGROUND

The amount of data that may be stored on portable digital devices is rapidly increasing, and likewise data transfer speeds are continually increasing such that there is significant scope for visitors to premises to engage in unauthorised and surreptitious downloading of material from an unsecured PC or terminal. Furthermore, the ongoing development of communications such as 2.5G and 3G (and future generation) technology will provide extremely fast data transfer speeds (typically 144kb/sec to 2Mb/sec) to give transfer speeds similar to current "broadband" technology to mobile users. This opens up many new applications and it is envisaged that integrated devices will be used which combine the functionality of a mobile (cell) phone with that of a camera capable of taking still or moving images. This in turn creates numerous opportunities but also carries with it some risk. For example, making devices widely available which are capable of capturing and transmitting good still or movie images and/or sound recordings may compromise security in many applications. For example, a legitimate visitor in a commercial premises could surreptitiously record and transmit still or movie images of a sensitive commercial nature, for example images of documents, building layout, industrial processes etc. Elsewhere, in public premises such as museums, theatres, concert halls, etc. a visitor may surreptitiously capture and transmit still or movie images or music performances or the like in contravention of their contractual obligations, copyright law, etc. Concerns have also been expressed at the possibility of images of children or adults being covertly taken in locker rooms etc and there are also religious objections to the unauthorised capture of images of people. These concerns need to be addressed by the service providers and manufacturers if the technology is not to run into problems.

The document EP 1445923 A1 provides a method for limiting the operation of a camera-equiped mobile communication terminal within an operation-limited area. The document US 2002/016169A1 provides a method for adjusting the operating parameters of a mobile terminal as a function its location. The location can be the cell of a particular base station.

### DISCLOSURE OF THE INVENTION

Accordingly, we have determined that there is a need to control usage of portable digital devices such as telephones etc. to prevent their usage in particular locations.

The invention provides a methods of controlling usage of a portable digital device according to claim 1.

In one aspect, this invention provides a method of controlling usage of a portable digital device having a data recording or capture function, the method comprising inhibiting operation of said data recording or capture function when said portable digital device is located in a specific geographic location or region.

In a first type of system, where the recorded/captured data is audio, image or video data, a security station may broadcast an inhibiting or disabling signal intermittently in the prohibited zone, and at least the audio recording and/or imaging device of the portable digital device will be disabled on receipt of this signal. The portable digital device is preferably configured so that, once back outside the prohibited zone, the functionality of the audio recording/imaging device is restored. This could be achieved for example by configuring the device such that the imaging functionality is inhibited for a set period after receipt of the disabling signal from the security station, but then returns if no subsequent disabling signals are received. In this system, it is not necessary to determine the location of the portable digital device.

In another embodiment, a portable device (e.g. a specially configured phone) may be used to transmit/broadcast the inhibiting or disabling signal (intermittently) rather than a fixed security station. Thus, the specific restricted geographical location or region can be defined as a certain radius around such a portable inhibiting device. The portable inhibiting device may be carried and activated by a person (thus providing a "personal wireless privacy zone") or it may be carried in/fitted to a vehicle. Another result of using one or more portable inhibiting devices is that they can be used as additional nodes/repeaters to strengthen/broaden the coverage of a signal broadcast by a fixed security station.

In another embodiment, the method includes monitoring the geographic location of the portable digital device, comparing the monitored location with a prohibited zone, and inhibiting operation of said audio recording/imaging device when said portable digital device is in said prohibited zone.

The geographic location may be monitored in numerous ways. In one example the portable digital device may have a navigation module or functionality such as GPS + GSM, GPRS, CDMA, UTMS and 3G). Alternatively, where the portable digital device operates within a cellular network, the location of the portable digital device may be determined by triangulation of signals from two or more cellular base stations. The system may utilise a local transmitter to increase the overall reception. Where the prohibited zone is in an area accessible only through selected entry points, each entry point may have an induction loop or other detector designed to detect when a portable digital device enters the prohibited zone through said entry point. Other means of detection include infrared signalling and short range low power radio systems such as WLAN, Wi-fi and Bluetooth. Each of the above systems preferably detects not only the presence of the portable digital device but also an information address such as the mobile telephone number uniquely to identify the portable digital device. It will be appreciated that GPS does not normally work in buildings as it requires a line of sight, and so a GPS system may be more appropriate for large out of doors prohibited zones such as airfields etc. For use inside a building the system may be modified, for example, by placing a GPS antenna on the building so that the location of the building is determined and the disabling signal passed to relevant rooms within the building and then broadcast by e.g. an IR or radio transmitter.

Alternatively, instead of actively monitoring for the presence of the portable digital device in a prohibited zone, or entry thereinto, the passage of a portable digital device into the prohibited zone may be deduced indirectly. For example, where employees in a prohibited zone each carry ID cards with unique information carried in a magnetic stripe or "smart" card chip, when the employee swipes his or her card on arriving at work, this may be used to cause the system to inhibit one or more portable digital devices logged as belonging to the owner of the card.

The method may further include steps of storing data relating to devices detected as being present (or that have been present) in the specific geographical location/region (or the "prohibited zone") and transmitting data to the present devices. For example, the data can include a message indicating that the user has entered an area where photography is not allowed, or where the area is a shop/mall for example, the data could relate to marketing information.

The steps involved in leading to inhibition of the operation of the audio recording/imaging device may be carried out partly at the portable digital device or at a security monitoring station. Thus in some methods the portable digital device may determine its location and transmit this (with or without prior interrogation) to the security monitoring station where the information is compared and, if the portable digital device is in the prohibited zone, the security monitoring station may send back a signal to the portable digital device to inhibit operation of the audio recording/imaging device. Alternatively, the security monitoring device may itself detect the presence of the portable digital device and transmit a signal inhibiting operation of the audio recording/imaging device.

The inhibiting operation may be in terms of a software instruction; for example where the portable digital device transmits the sound file/stream, still or movie image by attaching it to an email, the inhibition may be effected by preventing one of the critical steps in this operation, for example preventing sending of emails, or sending of emails with attachments. Alternatively, the inhibition operation may comprise disabling the audio recording/imaging device. The inhibiting operation is such as to prevent meaningful information from being transmitted and so in some instances may merely "scramble" the image or sound data. In another embodiment, the inhibition operation may disable the portable digital device itself.

The operation may be inhibited for a predetermined period of time before the operation can be enabled again. The method may include steps of modifying the memory/store of the device in some way (e.g. by saving a cookie file or setting a flag in the memory) to indicate that the inhibition operation has occurred, and checking whether the memory/store has been modified in this way before allowing access the data recording or capture function.

The inhibition operation may be communicated to the portable digital device by a number of ways; for example it may make use of the SMS text messaging system or a software change downloaded by the network operator, i.e. a "SIM update". Alternatively, the signal to the portable digital device to inhibit the operation may be transmitted over one or more radio frequencies, e.g. the signal may be sent using frequencies supported by one or more of GSM, GPRS, 3G, I-Mode, UTMS, Ultrawideband (UWB) wireless data standard and/or CDMA or the like. This can allow the method to work over more than one network. The one or more frequencies may include a "licence-free frequency" and/or a FM/AM radio frequency. The one or more frequencies used to transmit the signal may be changed at intervals to help improve security. Further, the signal may be transmitted in the form of an audio signal/tone, typically one having a frequency outside normal human hearing range. The tone may or may not be encrypted and can be decrypted at the device if needed. The signal may be transmitted at one or more optical frequencies (fixed or modulated), e.g. infrared or ultra-violet frequencies. The device may be provided with an optical receiver, which may be integral with or separate from the device.

The method may further include a step of installing code on the device for performing the control of usage of the device. The usage control code may installed by means of being included in a memory, processor or another component (e.g. a SIM card) within the device. The method may further include a step of activating the usage control code, e.g. by transferring it from the SIM card to a processor of the device upon request. The usage control code may be transmitted to the device by "Over the Air" techniques and/or using a Wi-fi "hotspot".

In some cases it may be desirable to at least attempt to permanently inhibit the data recording or transfer operation. Thus, the method can further include a step of modifying or deleting code within the device relating to the operation and/or preventing such code being executed/stored by the device.

The method may include steps of detecting disconnection of the device from the network, and preventing and/or modifying a normal store operation and/or a normal transmission operation relating to captured data upon said disconnection.

The method may include steps of detecting attempted operation of said data recording or capture function (normally when said portable digital device is located in the specific geographic location or region), and preventing a normal store operation and/or a normal transmission operation relating to the captured data.

A "normal store operation" can include steps usually performed by the device to store the data in memory in a way that allows a user to review and/or manipulate the data using the device. A "normal transmission operation" can include steps usually performed by the device to transmit the data from the device to another entity, e.g. by means of picture messaging, email or a Bluetooth (TM) link.

The method can include a step of deleting the captured data from the device. The method may further include a step of transmitting the captured data to a security entity, e.g. a network operator (such as a mobile phone network or an Internet Service Provider), the police/security agency and/or an authority associated with the geographic region/location, e.g. an employer or personnel department in the case of a workplace. Details of the device/user (e.g. a mobile phone number) that attempted to capture the data may also be transmitted to the security entity. Thus, data intercepted in this way can be thought of as being "confiscated" and the user is reported to a relevant authority.

The method may further include a step of broadcasting a source-identifying signal at the specific geographical location or region. The source-identifying signal may comprise an audio tone, typically one having a frequency that is normally inaudible to humans. Alternatively or additionally, the source-identifying signal may include a series of optical signals or other optical characteristics. Thus, the source-identifying signal and can be thought of as type of audio/visual "watermark" that is captured along with other sound/images at the location/region to identify that the data captured originated at the specific geographical location/region. The detecting step may include checking if data transmitted over a network includes a recording of the source-identifying signal. Thus, if an attempt is made to transmit the captured data over the network then its transmission can be prevented/intercepted and the data can be transmitted to a security entity instead.

In yet another aspect, this invention provides a method of controlling usage of a portable digital device having a data recording or capture function, the method comprising detecting operation of said data recording or capture function, and preventing and/or modifying a normal store operation and/or a normal transmission operation relating to the captured data. In some cases, the detecting step may only be performed when said portable digital device is located in a specific geographic location or region.

In yet another aspect, this invention provides a method of controlling transmission of data over a communications network, the method comprising steps of: broadcasting source-identifying signal to a specific geographical location or region; detecting attempted transmission of data including the source-identifying signal over the network, and preventing and/or modifying the attempted transmission of data including the source-identifying signal.

In a further aspect, this invention provides a method of storing data relating to devices detected as being present (or that have been present) in a specific geographical location/region and transmitting data to the present devices.

In yet another aspect, the present invention provides a method of disabling a data capture function of a portable digital device connectable to a communications network, the method including steps of detecting disconnection of the device from the network, and preventing and/or modifying a normal store operation and/or a normal transmission operation relating to captured data upon said disconnection. The disconnection detected may be due to a device/network malfunction (or movement out of range of the network) and/or user-selected disconnection.

The invention also extends to a portable digital device including audio recording and/or imaging devices and means for inhibiting operation of said audio recording and/or imaging devices when said portable digital device is located in a predetermined geographic location or region and/or in response to an externally generated inhibiting signal.

The invention further extends to a communication system including a security monitoring station and one or more portable digital devices as set out above.

Furthermore, the invention extends to a security monitoring base station for use in a system as just described, said security monitoring base station being operable to detect presence of a portable digital device in a prohibited zone and to transmit to said portable digital device a signal inhibiting operation of said imaging device.

Where the data recording/capture device captures data other than image/video data, for example numeric/text data or a software program etc, the system may operate to inhibit operation of the data recording/capture in various ways, analogous to those used for the imaging device as set out above.

At present, some countries ban devices such as camera phones and so phones may supplied in those countries with the data recording/capture function initially disabled. However, it may be desired to enable the function, e.g. if the phone is taken outside that country. In yet another aspect, this invention provides a method of controlling usage of a portable digital device having a data recording or capture function that is normally disabled, the method comprising enabling operation of said data recording or capture function when said portable digital device is located in (or outside) a predetermined geographic location or region.

Another consequence of increasing functionality of portable digital devices is that they are high value items likely to be stolen. The increasing amount of storage facility on such devices also means that loss or theft of such a device can have dire consequences for the user. Furthermore, as such technology becomes more widely available, the age at which children acquire portable digital devices with imaging functionality is reducing.

We have realised that in the above instances security may be enhanced by providing a facility whereby still or movie images are captured and transmitted back to a central station to assist recovery of lost or stolen portable digital devices, to provide digital evidence of theft for use in a court of law, and als to help authorised users such as parents or guardians to track the whereabouts of their children.

Accordingly, in this aspect, there is provided a method for capturing security information relating to a portable digital device which includes an imaging device, which method comprises enabling operation of said imaging device in response to an interrogation or enabling signal from a central station.

In this aspect the image data received by the central station may be stored for subsequent analysis or it may be rerouted through the cellular network or internet to another duly authorised user.

The signal enabling operation of the imaging device may take many forms; it may be a SMS signal or a SIM update or the various other methods typified herein. In this way the portable digital device may be programmed or controlled to capture and transmit still or movie images back to the central station or to a third party user.

In yet a further aspect, the invention addresses the problem posed by multifunctional portable digital devices which include some form of radio transmitter, e.g. for mobile communications such as GSM or GPRS, or Bluetooth short range radio communication, on board an aircraft. Such devices may interfere with fly by wire systems on board the aircraft and pose a safety threat, but it is impractical for the flight attendants to check that all passengers have switched off such devices.

Accordingly, in this aspect, the invention provides a system comprising a security station located on board a vehicle such as an aircraft, for transmitting a disabling signal to inhibit operation of communications devices incorporated in personal digital devices such as mobile phones or multifunctional devices.

Preferably, the personal digital devices may be configured such that functionality which does not involve radio communication is preserved to allow users to use other functions of the device.

It will be appreciated that some of the methods described herein can be implemented by means of separate and/or remote entities. The scope of the invention extends to cover such co-operating entities individually as well as jointly.

Concerns have been expressed over the use of portable digital devices, in particular certain applications such as cameras, and so some form of external control over usage of these applications is desirable. The form such control can take will typically involve restricting at least part of the functionality of the application, although other types of control, e.g. changing a mode of operation, may also be used. Applications, such as camera applications, accessible via/on the device will normally be controlled in this way, although other types of features, e.g. audible ringing of the device may be controlled by putting the device into its "silent" profile.

According to one aspect of the present invention there is provided a method of controlling usage of a portable digital device in a communications network.

The method can include steps of:
receiving a signal over the network at the device;
analysing the signal at the device to determine whether usage of the device should be controlled, and
controlling usage of the device in accordance with the result of the analysis.

The signal may be a substantially standard signal transmitted by a network components, e.g. a base station. The signal may be analysed for characteristics to determine the location of the device.

Alternatively, the method may include a step of providing additional transmitters in the network, the transmitters configured to transmit signals of a substantially standard form, wherein reception of such signals at the device is intended to initiate usage control of the device.

The method may include steps of:
providing a list of locations where control of the application is to be restricted;
comparing information regarding the location of the device with the locations on the list, and
if the location of the device is present in the list, producing a result indicating that usage of the device is to be controlled.

The list may be stored at least temporarily in the portable digital device. Data relating to the list may be transferred to the device over the network.

A portable digital device; a communications network (and components thereof, such as a base station); software for controlling the devices and/or the network components substantially as described herein are also provided according to further aspects of the invention.

In some embodiments of the invention, an application installed on a portable device can be controlled (which typically involve enabling or disabling, at least part of the functionality of the application) in response to receiving a signal (normally one compliant with the mobile telecommunication standard that is supporting the portable device) having one or more specific characteristics. This signal can be transmitted from a base station such that the application is switched on and off in geographic areas as appropriate. The characteristics are usually ones not originally intended as switching signals for the application. The use of existing network signals can minimise the need for new infrastructure development; limit the changes necessary on the portable device and infrastructure equipment; ensure a low cost implementation and ensure that other mobile devices on the same infrastructure system are unaffected.

The signal characteristics that can be used include the cell identity (ID), which is normally already transmitted on the BCCH (and so using this as the characteristic may mean that no changes need to be made to the signals transmitted by the base station). This information may be received and noted by all portable devices/mobile phones on cellular systems. The area in which the application is switched off can be that of the cellular phone system cell/cells to which the phone connects. If the portable device stores a list of cells, which may be updated by short messages, then no changes may be needed to the signals sent out from the cellular base stations.

Alternatively, the control channel on which the cell ID is radiated can include a flag that can be set to indicate whether the application should be switched on or off. This can permit more than one application to be switched, but requires that the bits on the control channel which are used for this purpose do not affect the functioning of other mobile phones.

New base station (or base station-like) components forming cells smaller than conventional network cells can be provided to control relatively small areas. The new base station components may not be connected to the cellular radio infrastructure and can be transmitters only. Such a transmitter will be referred to as a 'beacon'. In this case, the beacon may transmit substantially standard signals, except that the cell identity and/or the lack of a return path means that portable devices/mobile phones cannot affiliate to this cell. All the beacon cells in a network can use the same frequency and cell ID thus minimising spectrum usage and needing only one cell ID to be held on the portable devices, no matter how many geographic areas are being controlled.

Switching a beacon off can remove the area concerned from the excluded areas with no other change in settings on the portable device being required. Switching a beacon on and off can determine whether the application on the portable device should be enabled or not. The beacon cells may not form part of the network and other than the one frequency involved (which can be at a low power level), should create no co-ordination issues with other network assets. In addition, the beacons can be used by multiple networks. The beacons normally have no impact on other mobile phones that are not configured to have application controlled by the signals. The application to be controlled on the portable device will normally react to the beacon rather than its serving (conventional base station) cell. Standard mobile phones can detect the beacon transmission and the portable device operating soft/firmware will require some simple logic to switch off the application when, for example, the beacon cell identity is received above some specified signal level threshold. The cost of the beacons can be lower than that of full base stations because there is no receiver and no transmission paths required to carry traffic back through the network and no interactions with the rest of the network. Indeed, a beacon can be simply a RAM and a fixed frequency transmitter as all that is required is the repeated transmission of a fixed sequence of bits known as the BCCH.

The beacon may be in portable form and carried as a personal inhibitor such that applications like photography are prevented in the vicinity of a person (such an application may require a frequency to be allocated by a spectrum regulator for this purpose). These beacons can create zones that have sizes down to a few metres, for personal protection.

Recently, many countries around the world, including the UK, have produced legislation to curb the active use of mobile phones whilst behind the wheel of a vehicle. A disabling/controlling signal can be emitted from the headrest, roof, steering wheel or other, to disable incoming/outgoing calls from the drivers handset, forcing the call to be directed to voice mail. The disabling signal can be identified by software within the handset. A "call free zone" can thus be created within the driver's seat area of the vehicle. Calls can only be received/made if the handset is positioned in a hands free kit on dashboard, for example. A portable GSM (or UMTS) beacon can be considered to be a simple, low cost, low power, relatively long battery life device. It can be used to create a zone in which compatible mobile phones can have certain features controlled e.g. camera, ringer. A zone might be created by an in-car installation to set the state of phones not in an approved hands free cradle, e.g. to route inbound calls to voicemail.

A 'hybrid' scheme can be created by using both conventional network signals and the beacons. This can provide the ability to set up large and small exclusion zones. By using both the network signal and beacon techniques, tailored small and large disabled zones can be established in a cost-effective manner. The use of the GSM network signals may involve monitoring the serving cell and the use of a beacon may involve monitoring of a 'neighbouring' cell. The mobile device can simultaneously address both these methods to realise this hybrid scheme. This can effect the most appropriate scheme for identifying a disabled zone. In practice, checking whether the Cell Identity of the strongest measured signal is on a list of disabled zones could give the correct response most of the time and would need only one measurement method.

In a further modification, beacons can be created/installed on existing GSM network cells such that only one disable/enable method need be implemented on the portable device. This may achieved by, for example, transmitting an additional 'beacon' control channel BCCH from a base station radio (several time slots are defined for but generally unused by BCCH signals). This approach could use a single cell identity for all active exclusion zones, thus avoiding any need for a cell list being maintained on the mobile phone. If some of the base station radios are powered down (a common technique for better frequency re-use) then these could be used to carry the additional BCCH and provide further control of the size of inhibition areas without additional beacons.

It will be understood that the system can work on all forms of 2G, 2.5G, 3G and their successor standards (e.g. 4G) and 'unlicensed' band standards (IEEE802.11, Bluetooth etc) and networks using combinations of such standards. In particular, in addition to GSM, the system can be adapted to work with UMTS, CDMA and WCDMA (GSM/UMTS/CDMA/WCDMA). Using a GSM base station or a beacon can involve using the BCCH. UMTS also uses a BCCH and so using this version of the system for 3G should be achievable. A frame structure can allow inter system handover (3G TR25.922) WCDMA. UMTS hands over on the basis of measurements of control channels containing BCCH thus using this version a 2G/3G embodiment should be achievable.

Any suitable enhanced location scheme can be used to determine if a mobile device is within a "prohibited zone", which has been defined by a party such as a network operator. Examples of these schemes include cell-ID; e-cell ID; Angle of Arrival; Time of Arrival and Time-difference of Arrival; Enhanced Observed Time Difference; Assisted Global Positioning System (A-GPS); Signal Strength and "hybrid" schemes, which are discussed in the article by K. Raja, W.J. Buchanan and J. Munoz on pp. 34 - 39 of IEEE Communications Engineer, June/July 2004.

An ideal solution to switching off applications, e.g. a camera, in a mobile device could be considered to be one that requires no changes to mobile camera phones. However, in existing phones on/off switching of the camera application requires modification of software/firmware on the phone if this switching is to be conditional on a status 'flag' or network signal. The software application installed on the camera phone can include two components: a software switch to enable/disable the camera and software that recognises the presence, or not, of a status 'flag' or network signal that directs the phone to disable/enable the camera. Over-the-air download of the software may be the preferred route for installing this software on phones. The software application of the present application could be 'pushed' onto the mobile camera phone and monitored by the network operator. The software could be installed on the phone by the OEM or initial seller of the mobile phone. This would have an inherent benefit that if the phone is ever reset to 'factory settings', the application is still installed.

GSM phones have a unique IMEI and require a SIM card supplied by the network operator. This card has a unique IMSI to which the operator assigns a telephone number to identify the mobile subscriber. Although it is possible to purchase a phone without a SIM card, until one is inserted in the phone it is not normally possible to access most of its features including the camera. Hence the network operator is effectively controlling access to the camera application. Access to the application changes from being "always available" to a conditional access based on the phone's location. Although the software of the present application is small in software terms, it may be preferable to load into the phone rather than on the SIM. The SIM (via SIM toolkit) may be used to update the software, e.g. identities of prohibited cells, information for handset display, etc.

In alternative embodiments, switching other phone features can be achieved by extending the 'flag', e.g. to switch the phone into a silent mode or initiating transmission of position-related SMSs.

Whilst the invention has been described above, it extends to any inventive combination of the features set out above or in the following description. In particular it should be noted that the inventive features herein may be implemented in both software and hardware applications.

### DESCRIPTION OF THE DRAWINGS

The invention may be performed in various ways, and embodiments thereof will now be described by way of example only, reference being made to the accompanying drawings, in which:
Figure 1 is a schematic view of a first embodiment of a system designed to inhibit operation of a camera/video on a portable digital device;
Figure 2 is a schematic view of a second embodiment of a system designed to inhibit operation of a camera/video arrangement on a portable digital device;
Figure 3 is a schematic view of a third embodiment of a system designed to inhibit operation of a camera/video arrangement on a portable digital device,
Figure 4 is a schematic view of a portable digital device on which a camera or video may be enabled when the device has been reported lost or stolen;
Figure 5 is a schematic view of a fifth embodiment of this invention;
Figure 6 is a schematic view of a sixth embodiment of this invention, based on a client/server arrangement;
Figure 7 is a flowchart showing steps executed in one embodiment of a client-based process, and
Figure 8 is a flowchart showing steps executed in one embodiment of a server-based process.

### DETAILED DESCRIPTION OF THE INVENTION

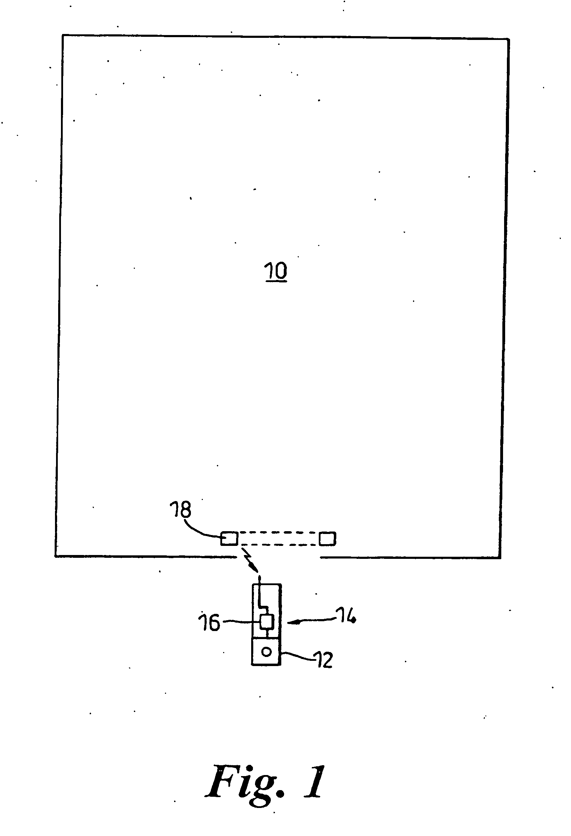

Referring initially to Figure 1, there is shown a prohibited zone 10, here in the form of a room, where it is required to prevent operation of a camera or video image capture device 12 on a portable digital device 14. In this embodiment the portable digital device 14 is designed such that, on receipt of a predetermined signal, a circuit 16 inhibits operation of the imaging device 12. This could be by preventing any image capture at all or preventing transmission of an image once captured. In this embodiment the circuit 16 is responsive to an inhibit signal emitted from a low range transmitter 18 located just inside the door into the prohibited zone 10. On leaving the room the camera/video functionality may be restored by transmitting a further signal (not shown) to enable the circuit 16. In this arrangement it is not necessary to determine the position of the portable digital device 14 absolutely because the prohibited zone is accessible through just one access point and so the system only needs to know whether the communication device has been brought in to or out of the zone 10.

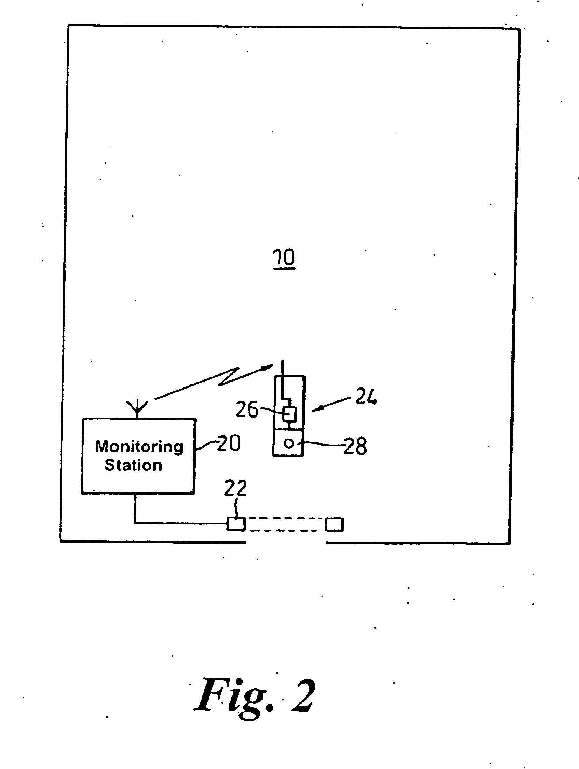

Referring now to the second embodiment of Figure 2, a monitoring station 20 is connected to a detector 22 which detects entry of a personal communication device 24 in to the prohibited space 10. On detecting such entry, the monitoring station 20 transmits an inhibit signal to the personal communication device 24 so that the inhibit circuit 26 inhibits operation of the camera 28. In either of these embodiments the inhibit signal could be used to inhibit capture of other, non image data, in addition to or instead of inhibiting capture of the image data.

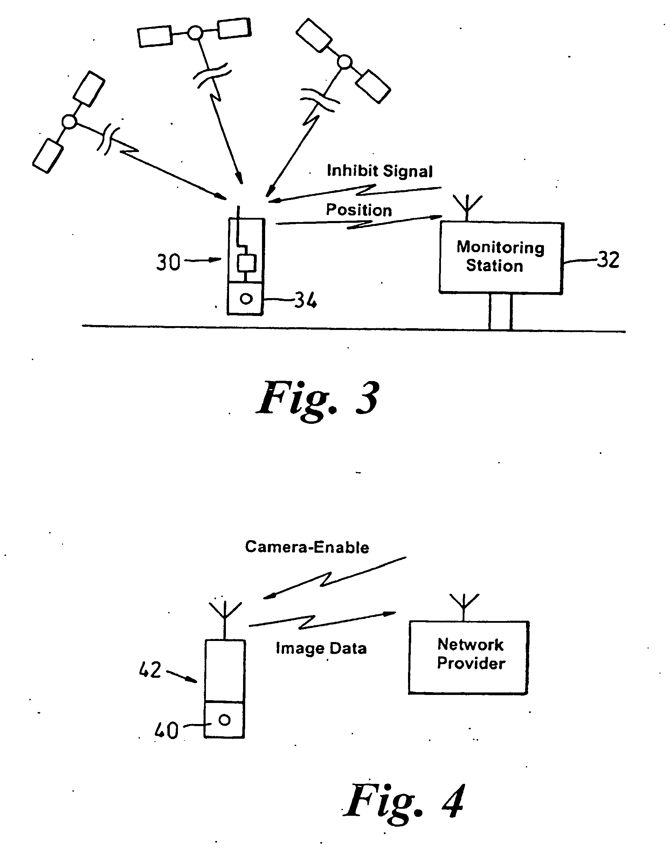

Referring to the third embodiment of Figure 3, here the portable digital device 30 includes a GPS module which enables it to determine its location using the GPS system. Having determined its location, the portable digital device transmits information identifying its position to a monitoring station 32 which determines whether the portable digital device 30 is within the prohibited zone. If so, then the monitoring station transmits an inhibit signal to the portable digital device 30 to prevent operation of the camera/video 34. It will be appreciated that the system could be modified so that the portable digital device. 30 itself determines whether it is within the prohibited zone and, if so, either inhibits operation of the camera/video device 34 or provides a signal to the network/system provider who deactivates the telephone.

Referring now to Figure 4, there is schematically shown a system designed to allow enabling of an on-board camera/video device 40 when a portable digital device 42 has been reported missing. In this instance, the owner of the portable digital device 42 will notify the network provider who will issue a camera enable signal to the portable digital device so that it captures image data and transmits it to the network provider. The image data may be one or more still images or video clips. The network provider can either forward these to the legitimate owner of the portable digital device and/or to the authorities to allow tracking and/or recovery of the portable digital device. Another use of this system would be to allow tracking of unaccompanied minors.

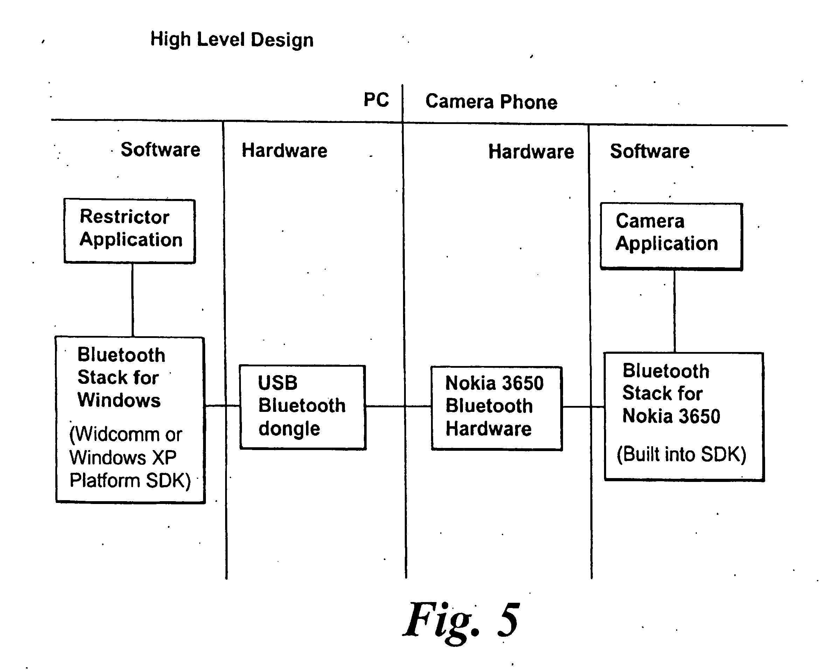

Referring now to Figure 5, this embodiment of device employs "Bluetooth" technology to inhibit operation of a camera module forming part of a mobile (cell) phone. The commercial range of mobile phones is continually evolving but current typical popular camera phone devices include Nokia 3650 and 7650, Sony Ericcson P800, Samsung SGH-V205, Samsung V200, Sanyo SCP-5300 and Sharp GX10i. There are two main components in this embodiment, namely a camera-phone camera application and a PC application. The camera-phone camera application is a simple picture-taking application that also advertises a new Bluetooth service called "camera restrictor" which is discoverable by a remote device during a Bluetooth discovery routine. The PC application is typically a Windows application (though other types of operating system are not excluded) that uses a Bluetooth stack suite of programs to perform a device enquiry to identify Bluetooth devices in range and to send messages to those devices that advertise the "camera restrictor" service during the Bluetooth discovery routine, to disable the picture-taking application.

The camera application on the phone and the PC application communicate via a serial connection over Bluetooth. The PC application requires no input from the user - it only displays information about the Bluetooth devices that are within range of the PC, and connects automatically to those devices which are advertising the "camera restrictor" service. The camera application allows the user to take photographs (but these are not stored on the device). The user does not control the restricting functionality, but when the camera is restricted (by having received a disabling signal from the PC application) messages are displayed to indicate when the last restricting message was received, and when the restriction is to be lifted (assuming no more messages are received at that time).

The restrictor application shown on the top left of Figure 5 is a Windows application that uses the Bluetooth stack (typical examples are the stack included in the Windows XP Platform SDK, or the Widcomm stack) to enumerate all Bluetooth devices in range and the services they offer. Once it has finished detecting devices, it connects to each device that advertises a "camera restrictor" service in turn, and sends a simple serial message. The application continuously loops around these actions, detecting devices in range, and then connecting and sending data to those that advertise the "camera restrictor" service. The restrictor application may have the ability to monitor/report upon the number of devices within a restricted area.

The user interface to the restrictor application does not allow for any interaction; it simply displays a list of devices, together with information about each device. In this particular example the following information about each device is stored in an array by the main execution loop:
- Device ID and name
- Device type
- Camera restrictor service advertised
- Time device was last seen
- Time device was last sent serial message (if applicable)

When a device has not been detected for a pre-determined time, it is removed from the array and therefore is no longer shown on the display.

The camera application in the phone handset shown on the top right of Figure 5 allows the user to take pictures using the built-in camera of the mobile phone. It is a simplified camera application that does not store pictures to memory or provide a viewfinder preview. When the camera application starts, it also advertises a Bluetooth service called "camera restrictor". When a Bluetooth connection occurs using the "camera restrictor" service a serial connection will automatically be established and a flag is set. Whilst this flag is set, the option to take pictures is no longer available to the user. Instead, a message is displayed to indicate that the phone is within a restricted area. A timer is then started and, if it reaches a pre-determined value, the camera functionality is restored. If however a further connection to the "camera restrictor" service is received, the timer is reset, and the camera functionality continues to be suppressed.

In the above embodiment, there may be a finite amount of time between the camera application starting up and enabling the picture taking function, and when the PC application detects the "camera restrictor" service and sends the command that inhibits the picture taking function. In a modification therefore, the camera application may be modified to implement a delay between the camera application starting and full picture-taking functionality.

Alternatively, the "camera restrictor" service could be advertised and handled by the operating system rather than the camera application, to ensure that the camera is disabled well before any camera application is run.

The described embodiment may be used to handle multiple devices within range of the Bluetooth antenna on the PC (typically 10 metres or so).

The mobile phone is preferably arranged to ensure that Bluetooth is permanently enabled and it is preferred for the phone to be configured to automatically accept Bluetooth requests from certain devices. Thus in this embodiment the phone is preferably configured automatically to accept Bluetooth requests from the PC running the camera restricting software.

It should be appreciated that where the area within which picture taking is to be inhibited is relatively large, several PCs may be set up to provide extended area coverage, each working in a similar manner to that described above.

The restrictor application may use a suitable uplink such as GSM to a central database to confirm the geographic location of the restrictor application and thus the geographic location of the devices that the installation is inhibiting.

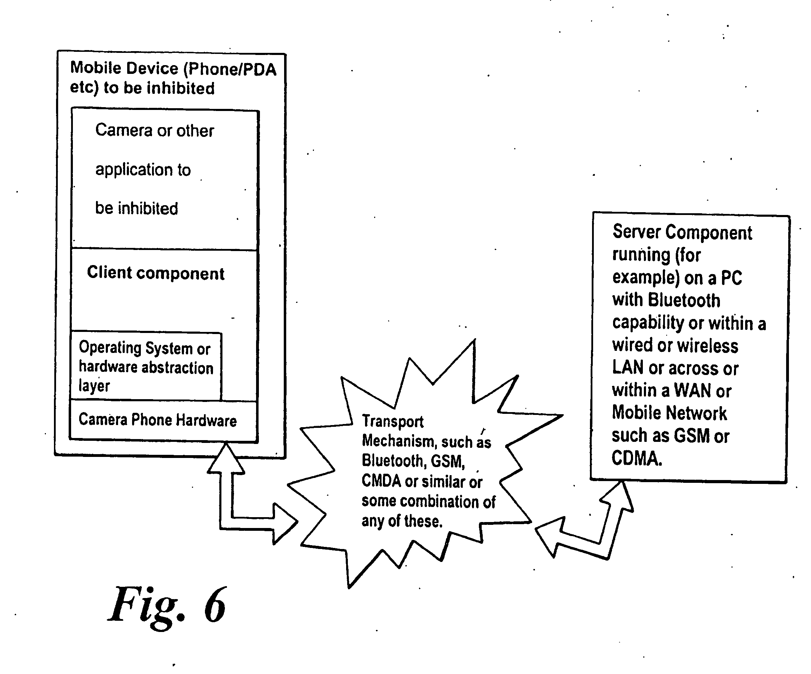

Referring now to Figure 6 there is shown an overview of a further embodiment in accordance with this invention.

This embodiment consists of two elements, namely a Client Component and a Server Component.

### Client Component

This component runs on a mobile device that is to have some service (such as a camera) inhibited. It is responsible for communicating with the Server component to determine if the phone is located within a region where the service is to be inhibited.

### Server Component

This component runs on a central "server" which may be within an office location or general area in which service is to be restricted, or may be executing on some remote server element (perhaps across a wired or wireless LAN or WAN or a GSM, CDMA or other mobile communications network). It will receive information from a Client Component, a mobile network or some other system or device, or some combination of these. From this information it will determine if one or more services or devices within the mobile device containing the Client Component is to be inhibited. It is responsible for refreshing the inhibition status of the device on a regular basis whilst in the area in which the service is to be restricted.

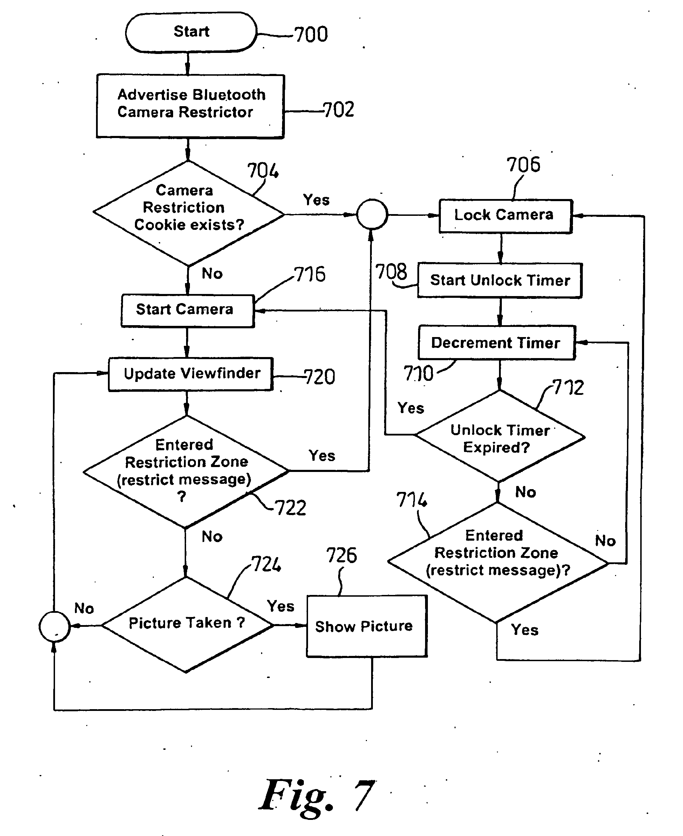

Figure 7 illustrates steps that can be performed by an embodiment of the functionality-restriction software executed on the portable digital device. The software is ideally the only way to access to the camera functionality of the device so that the functionality-restriction software cannot be bypassed by using another software application on the device. In the example, the device comprises a mobile camera phone having Bluetooth ™ capabilities. The process starts at step 700 and then at step 702 the camera advertises that it is configured with the camera restrictor software using known Bluetooth ™ techniques. For example, the camera restrictor software can be advertised as a Bluetooth (TM) serial port class service with a unique identifier (UID) of 0x1005B8B. Whenever character data is received via this port, the software can switch the device to its restricted mode of operation.

At 704 a question is asked whether a "camera restriction" cookie exists in the memory of the device. This is one example of how the device determines whether the use of camera is restricted, but it will be appreciated by the skilled person that other ways of implementing such a check are possible. In the example, whenever the device is switched to its restricted mode of operation, it creates and stores an empty file (e.g. "C:\restrictor.dat"). This file is used as a "cookie" to indicate that the device is in its restricted mode. If the user exits and restarts the software then the presence of this cookie file indicates that the camera function should start up in the restricted mode. This is intended to prevent a user from circumventing the camera restriction software by closing the active Bluetooth (TM) service. If the question asked at step 704 is answered in the affirmative then control passes to step 706 where the camera functionality of the phone is disabled and the device is unable to take or show any pictures. The software may display a message on the screen that the device is in a restricted area. After this step, a "camera unlock" timer (e.g. 45 seconds in duration) is started at step 708, with the timer then being decremented at step 710. The number of timer seconds remaining may be displayed on the screen of the device. At step 712 a question is asked as to whether the "camera unlock" timer has expired. If it has not then control is passed on to step 714, otherwise the camera restrictor cookie file is deleted and control is passed to step 716.

At step 714 a question is asked as to whether the camera has entered a restricted zone (i.e. whether the camera has entered an area where photography is prohibited before the current "unlock" timer has expired). If this question is answered in the negative then control is passed back to step 710, otherwise control is passed back to step 706, so that the camera continues to be disabled and the "unlock" timer is restarted.

If the question asked at step 704 is answered in the negative then control is passed on to step 716 and the camera functionality on the phone is enabled. At step 720 the viewfinder of the camera is updated and at step 722 a question is asked whether the camera has entered a restricted zone. If the answer to this question is yes then control is passed on to step 706, otherwise control is passed to step 724.

At step 724 a question is asked as to whether a photograph has been taken. If the answer is no then control is passed back to step 720, otherwise control is passed on to step 726, where the captured image is displayed on the phone.

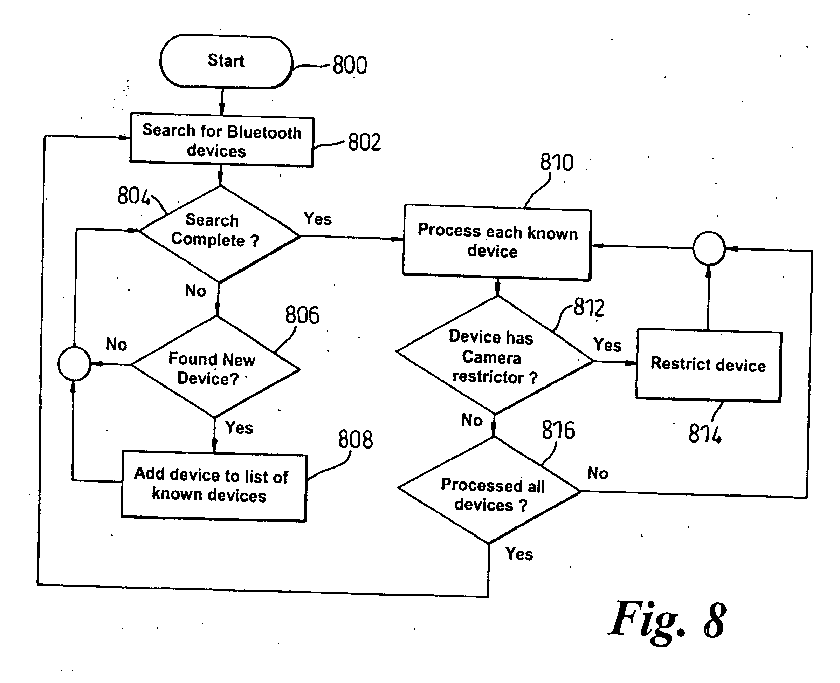

Turning to Figure 8, the process performed by the server component commences at step 800 and at step 802 the server searches for Bluetooth ™ devices within the restricted zone. At step 804 a check is carried out as to whether the search is complete. If the check is not complete then at step 806 a question is asked as to whether a new device has been found. If this is answered in the negative then control is passed back to step 804. If a new device was found at step 806 then control is passed to step 808 where the found device is added to the list of known devices stored by the server. Data regarding the device class, the device user identifier and device friendly name may be stored. The server component may display this information to a user at a security monitoring station by means of a standard control list which presents a grid or spreadsheet style of view. In this way, the user can quickly examiner the list of known devices in range and see which devices are configured with the camera restriction software and which of those currently inactive are unable to take any pictures. Steps 802 to 808 can be thought of as a "discovery cycle" of the process and the remaining steps can be thought of as a "restrict cycle".

If the question asked at step 804 is answered in the affirmative then control is passed on to step 810 where each found device is processed in turn. At step 812 a question is asked whether the device being processed is configured with the camera restriction software. When the server process finds a device that has not been encountered during a previous discovery cycle, it obtains the list of Bluetooth ™ services that the device offers. In particular, the server process determines if the device is executing the camera restriction software (e.g. based on the Bluetooth UID of 0x10005B8B). To speed up the connection process between devices, it is only necessary to connect a device once and record the session handle. Therefore, the server process sends the restrict command to any devices that have a session handle open and also any devices that have been detected during this cycle.

If the question asked at step 812 is answered in the affirmative then control is passed on to step 814 where the server process sends a restrict signal to the device over the restrictor port. This may take the form of a character string (e.g. "restrict 60000"), which triggers the restriction software on the device to switch to restricted mode (c.f. step 704 of Figure 7). This restriction process can typically place in a period of milliseconds. Control then returns to step 810 so that any further devices can be processed.

If the question asked at step 812 is answered in the negative then control passes to step 816. At this step a question is asked as to whether all the devices in the list have been processed. If not, then control returns to step 810, otherwise control passes back to step 802, i.e. the server process returns to the discovery cycle.

Depending on timing and radio conditions, the time taken to discover and disable a camera phone can vary up to around 30 seconds. This 30 second approximation is derived by assuming that in any 30 second period, the server process in ideal conditions can carry out two discovery mode cycles and up to 8 service discovery requests. Thus, a device can be disabled in less than 15 seconds. Once the server process has discovered an established connection to a device, it is not necessary for the server process to perform further service discoveries on the device. This can improve performance by negating the need for the service discovery cycle on known devices. It should be noted that these timing calculations are exemplary only, as the underlying Bluetooth ™ timings can change depending on a number of radio conditions.

In the above embodiments, a suitably equipped PC may upload software so that it may operate as a base station in a protected area, and the invention extends to a program for controlling a suitably configured computer to operate as a base station. Likewise the software could be loaded onto a wireless gateway, so that the wireless gateway also acted as a base station. Methods of loading appropriate system software onto the mobile device are discussed in the section "Methods for installing software/hardware to the client" below.
Methods for communication with the client device (phone handset, pda etc) to disable the camera or other data capture application

It will be appreciated that ways of transmitting a signal to the portable device to disable the data capture function other than the Bluetooth (TM) embodiment of Figures 7 and 8 can be implemented. These include:
Radio Transmission - (GSM, GPRS, 3G, I-Mode, UMTS, UWB, CDMA etc) Communication between the cell/node antenna and the client could be facilitated by the aforementioned standards that operate in licensed bands that vary in different countries. The concept includes the installation of a 'cell' or node antenna that provides communication with the client within a small or a large areas as determined by the client antenna and radio power. At present, GSM communicates between client and server/node at a frequencies between 900 Mhz (megahertz) and 1.8 Ghz (gigahertz). 3G communicates between cell antenna and client at around 2Ghz. Other standards may be licensed to communicate at higher or lower frequencies in the future. If the privacy region is to communicate with all phones in the region then the node or 'cell' will need to communicate at all the different frequencies of the different types of clients.
Radio Transmission at Licence-free frequencies - The server/node could communicate with the client using licence-free frequencies. These signals may or may not need encryption to ensure security. This embodiment may include different modulation techniques including spread spectrum technologies. A variant of this is to transmit fm or am radio signals, such as that used in the "itrip" fm transmitter for the "ipod" MP3 player produced by Apple. The application communicates at a particular frequency that can be picked up by a conventional FM radio, to transmit music from the ipod to the radio. Specifically for the system described herein, the server/node could transmit at a similar frequency communicate with the client to disable the camera or other application functionality. Additionally, the server/node can be managed wirelessly or otherwise to change the particular communication frequency at intervals to improve the system security.
Audio communication - The server/node could communicate with the client (handset) by emitting a particular audio signal that can be received by a microphone and/or other audio receiver on the client. This audio communication could be at a frequency that is outside the normal hearing band. This tone may or may not be encrypted.
Optical communication - The server/node could communicate with the client at optical frequencies (fixed frequency or modulated) that is visible or invisible (infra-red or ultra violet) to the human eye. The optical receiver on the client could be separate or it could be the camera.

### Methods for installing software/hardware to the client

Over the Air "OTA" techniques - The software component of the system could be transmitted and installed on the client, by the network provider via OTA systems. Over The Air (OTA) is a standard for the transmission and reception of application-related information in a wireless communications system. The standard is supported by Nokia, SmartTrust, and others.

OTA is commonly used in conjunction with the Short Messaging Service (SMS), which allows the transfer of small text files even while using a mobile phone for more conventional purposes. In addition to short messages and small graphics, such files can contain instructions for subscription activation, banking transactions, ringtones, and Wireless Access Protocol (WAP) settings. OTA messages can be encrypted to ensure user privacy and data security.

More recently, OTA systems are becoming more advanced giving network providers the ability to install more sophisticated applications to the clients of their subscribers. Such systems can also offer monitoring/reporting functionality.
SIM Card - The software of the system could be latent within a SIM card and uploaded from the SIM card to the client microprocessor.
Microprocessors - The software of the system could be installed in the microprocessors used in the client. Examples include the Texas Instruments "OMAP" processor, the ARM processor for the central microprocessors or in the Bluetooth (TM) application processors such as those produced by Cambridge Silicon Radio.
Operating Systems - The software component of the system could be available within the operating system of the client. Current examples include Symbian, Microsoft Smartphone OS and manufacturer specific operating systems. Hotspots (Wi-fi) - The software component of the system could be transmitted to the client through a regional wireless 'hotspot'.

Other embodiments of the system will now be described:
Disabling the camera functionality as standard with the ability to enable.

The embodiments described above mainly concentrate on the disabling of imaging/data recording functionality within a particular area or zone. However, increasingly today the outright banning of camera phones is the standard, e.g. the countrywide ban of camera phones in Saudi Arabia. It follows therefore that the system could disable the imaging functionality as standard with the functionality being enabled on entering a particular area or zone. An example could be that for Saudi Arabia, all camera phones are disabled as standard (affecting all public areas), however on entering a particular area (private dwelling), the functionality is enabled. This embodiment would require a node/server to be installed in the "enabling" area.

### Disabling functionality completely

The system can be modified by using the software to attempt to permanently disable the camera functionality. Increasingly today, most clients are being shipped with embedded cameras. Many of these high-end clients are invariably marketed to the large corporate organisations because of their high levels of all round functionality, however increasingly these corporate customers are prohibiting cameras on site. It follows that such high-end phones could still be sold to such corporations with the intention of using the system to permanently disable the camera functionality.

### Further functionality

In a further embodiment, the server/node component of the node could be made portable, affording, for example, the ability for an individual to create a "wireless privacy zone" within a certain area of that person's location. The node could be inherent within the client or a separate piece of hardware.

Increasingly, politicians, film stars and other individuals in the public eye are falling victim to the surreptitious taking of their person, image or "brand", by members of the paparazzi or public armed with camera phones. The aforementioned concept would effectively disable localised surreptitious taking of images. In another scenario, members of the public have been caught taking camera/video phone images at the scene of major accidents, including car and rail crashes. Such images, once disseminated onto the Internet, are a major source of concern for friends and families of the victim, not to mention the victim themselves. Following on from this, the ability to use portable nodes within emergency vehicles (ambulance, police, fire), or used by emergency personnel themselves, would disable surreptitious image-taking at the scene of the incident.

### Clients (Handsets) as further nodes/repeaters

Clients with the relevant software/hardware could be used as additional nodes or repeaters to strengthen the disabling signal. In this situation, a public area such as leisure centre may have been installed with a number of nodes to disable imaging functionality for an average number of clients used in that particular location. At certain times of the year, the leisure centre may be frequented by an extraordinary number of people and corresponding handsets which cannot be adequately disabled by the existing node infrastructure. An example could be a large music concert in the main hall of the centre. In this embodiment, each additional client entering the zone acts as a repeater node strengthening the signal therefore the higher the number clients, the stronger the signal and therefore the higher probability of disabling the camera or other features functionality.

### Non-compliant handsets used in compliant "wireless privacy zones"

Sometimes, situations may arise whereby a noncompliant handset (i.e. without some or all of the software for implementing the system discussed herein) is used to take surreptitious images in a protected area (i.e. nodes installed and secure zone created). In this situation, a further set of security measures can be included. These measures seek to confiscate the image once it has been taken and an attempt is made to transfer it over a network, e.g. a GSM network and or ISP's (if sent via Internet). The network may be configured to filter and confiscate the image and alert relevant authorities, e.g. employer, police. The system can use audio and/or visual techniques. In the audio form, the node emits an encrypted tone or "watermark" that is captured within the data recording session but is inaudible to the human ear. Once sent via GSM or the Internet, the relevant filters recognise that the audio file had been recorded surreptitiously in a designated secure zone and "pull it back" or confiscate. At this stage, the network provider or ISP can inform the co-ordinator of the designated secure zone that an individual with a particular phone number took a particular recording in this secure zone and that particular time.

In the visual form, the nodes could emit a series of optical signals or other optical characteristics or the privacy zone could have certain optical characteristics. These characteristics can be filtered by the aforementioned systems and the perpetrator can be brought to justice. These optical characteristics could also be used by including "watermarking" within confidential documents and on confidential plant and machinery, such as the special marks put on cars under development by car manufacturers.

### Compliant phone audio/visual watermarking recognition

In a situation whereby a phone does have the relevant disabling functionality, but the GSM, Bluetooth or other communication methods are malfunctioning; the system may need to use a secondary method to stop the image being sent. The system may need to have the ability to confiscate/delete watermarked images and/or audio and possibly alert the network provider.

### Node infrastructure used to communicate messages to clients in particular area

The infrastructure represented by the system uses nodes to communicate with compliant clients. This creates a wireless network within a particular area. This network can be utilised further to disseminate particular information to individuals using the client. One example could be in offices whereby pertinent information such as times of upcoming practice fire alarms are sent to the client with corresponding details of the nearest fire exits. Similarly, the network could be used as a direct marketing tool in shopping malls whereby shop locations and special offers can be communicated to the client once it enters the shopping area or zone. Other examples include the streaming of film clips in cinema foyers.

### Camera functionality when phone is turned off

Some high end handsets, for example that Handspring Treo can take photo images even when its core communication method (e.g. GSM) is turned off. In this situation, the system can be further enhanced in a number of ways. Firstly, the software ensures that even if the GSM functionality is turned off, other methods of communication are still available to disable the camera's use e.g. Bluetooth (TM), infra-red, Wi-Fi and so forth. Secondly, the system and corresponding software can force the camera functionality to be disabled as standard once radio communication has been switched off. Thirdly, the system could be incorporated into the client software such that it transmission is disabled if it has photo attachments whilst in the privacy zone.

### MP3 players and USB portable drives

Increasingly, MP3 players like the "ipod" and other portable drives have the ability to store images and record audio. The aforementioned system could cover these devices also, stopping recording in protected locations.

### Audio Recording

Both 2G and 3G handsets have the ability to record considerable amounts of audio data. The examples described above could be adapted by the skilled person to disable a microphone for capturing audio rather than (or in addition to) disabling a camera or the like for preventing of image capture.

### METHOD OF INDUSTRIAL APPLICATION OF INVENTION

The invention has industrial application in the field of communications networks.

## Claims

1. A method of controlling usage of a portable digital device in a communications network,
**characterised in that** the method includes the steps:
receiving at the device an inhibiting signal from a portable beacon transmitter that is carried as a personal inhibitor of a person ;
analysing the inhibiting signal at the device to determine whether usage of the device should be controlled, and
controlling usage of the device in accordance with the result of the analysis, whereby applications of the portable digital device are
prevented in the ricinity of the person in which the inhibiting signal is received.

2. A method according to claim 1 including the further steps of: a) receiving a signal over the network at the device the signal including a cell identity (10); b) analysing the cell identity (10) at the device to determine whether usage of the device should be controlled; and c) controlling usage of the device in accordance with the result of the analysis of cell identity.

3. A method according to claim 2 wherein the signal is a standard signal transmitted by a network component.

4. A method according to claim 3 wherein the network component is a base station.

5. A method according to any preceding claim wherein the signal is analysed for characteristics to determine the location of the device.

6. A method according to any preceding claim wherein it includes a step of providing additional transmitters in the network, the transmitters configured to transmit signals of a standard form, wherein reception of such signals at the device is intended to initiate usage control of the device.

7. method according to any preceding claim further including the steps of:
providing a list of locations where usage of the device is to be controlled;
comparing information regarding the location of the device with the locations on the list; and
if the location of the device is present in the list, producing a result indicating that usage of the device is to be controlled.

8. A method according to claim 7 wherein the list is stored at least temporarily in the portable digital device.

9. A method according to claim 7 wherein data relating to the list is transferred to the device over the network

10. A method according to claim 2 in which the usage that is controlled is usage of an application installed on the portable device and the cell identification (ID) is one of one or more specific characteristics of the received signal.

11. A method according to claim 10, wherein control includes enabling or disabling at least a part of the functionality of the application.

12. A method according to claim 10 or claim 11 wherein the signal received is a signal compliant with a mobile telecommunication standard that is supporting the device.

13. A method according to any of claims 10 to 12 wherein the signal can be transmitted from a base station such that the application is switched on and/or off in geographic areas.

14. A method according to any of claims 10 to 12 wherein the one or more specific characteristics are not originally intended as switching signals for the application.

15. A method according to any of claims 10 to 14 wherein the signal characteristics are received and noted by all portable devices/mobile phones on cellular systems.

16. A method according to any of claims 10 to 15 wherein the area in which the application is switched off is that of the cellular phone system cell/cells to which the phone connects.

17. A method according to any of claims 10 to 16 wherein the control channel on which the cell ID is radiated includes a flag configured to be set to indicate whether the application should be switched on or off.

18. A method according to any preceding claim wherein a base station or base station-like components forming cells smaller than conventional network cells are provided to control relatively small areas which are not connected to the cellular radio infrastructure and which are beacon transmitters only.

19. A method according to claim 18 wherein the beacon transmits standard signals, except that the cell identity and/or the lack of a return path means that portable devices/mobile phones cannot affiliate to this cell.

20. A method according to any of claims 18 and 19 wherein all beacon cells in a network use the same frequency and cell ID thus minimising spectrum usage and needing only one cell ID to be held on the portable devices, no matter how many geographic areas are being controlled.

21. A method according to any of claims 18 to 20 wherein switching a beacon transmitter off can remove the area concerned from a set of excluded areas with no other change in settings on the portable device being required.

22. A method according to any of claims 18 to 21 wherein switching a beacon transmitter on and off can determine whether the application on the portable device should be enabled or not.

23. A method according to any of claims 18 to 22 wherein the beacon transmitters can be used by multiple networks.

24. A method according to any preceding claim wherein the applications prevented include photography.

25. A method according to any of claims 18 to 24 wherein beacon transmitters are created/installed on existing GSM network cells such that only one disable/enable method need be implemented on the portable device.

26. A method according to claim 25 wherein said method is achieved by transmitting an additional 'beacon' control channel BCCH from a base station radio.

27. A portable digital device in a communications network, said portable digital device comprising:
a receiver configured to receive an inhibiting signal from a portable beacon transmitter that is carried as a personal inhibitor of a person;
means for analyzing the inhibiting signal to determine whether usage of the portable digital device should be controlled; and
means for controlling usage of the portable digital device in accordance with the result of the analysis, said means for controlling configured to at least partially prevent applications of the portable digital device from executing in the vicinity of the portable beacon transmitter.

## Patentansprüche

1. Ein Verfahren zum Steuern der Verwendung eines tragbaren digitalen Geräts in einem Kommunlkationsnetzwerk,
**dadurch gekennzeichnet, dass** das Verfahren die folgenden Schritte aufweist:
Empfangen eines hemmenden Signals an dem Gerät von einem tragbaren Signalfeuer-Sender, der als eine persönliche Hemmeinrichtung einer Person getragen wird;
Analysieren des hemmenden Signals an dem Gerät, um festzustellen, ob eine Verwendung des Geräts gesteuert werden soll, und
Steuern der Verwendung des Geräts in Abhängigkeit von dem Ergebnis der Analyse, wobei Anwendungen des tragbaren digitalen Geräts in der Nähe der Person verhindert werden, in der das hemmende Signal empfangen wird.

2. Ein Verfahren nach Anspruch 1, ferner mit den weiteren folgenden Schritten: a) Empfangen eines Signals über ein Netzwerk an dem Gerät, wobei das Signal eine Zellenidentität aufweist (ID); b) Analysieren der Zellenidentität (ID) an dem Gerät, um festzustellen, ob die Verwendung des Geräts gesteuert werden sorte; und c) Steuern der Verwendung des Geräts in Abhängigkeit von dem Ergebnis der Analyse der Zellenidentität.

3. Ein Verfahren nach Anspruch 2, wobei es sich bei dem Signal um ein standardisiertes Signal handelt, das von einem Netzwerkteil gesendet wird.

4. Ein Verfahren nach Anspruch 3, wobei es sich bei dem Netzwerkteil um eine Basisstation handelt.

5. Ein Verfahren nach einem der vorhergehenden Ansprüche, wobei das Signal im Hinblick auf Charakteristiken analysiert wird, um den Aufenthaltsort des Geräts zu bestimmen.

6. Ein Verfahren nach einem der vorhergehenden Ansprüche, wobei das Verfahren aufweist einen Schritt des Bereitstellens von zusätzlichen Sendern in dem Netzwerk, wobei die Sender dafür ausgebildet sind, Signale in einer standardisierten Form zu übertragen, wobei der Empfang von solchen Signalen an dem Gerät dafür bestimmt ist, um eine Steuerung der Nutzung des Geräts zu Initiieren.

7. Ein Verfahren nach einem der vorhergehenden Ansprüche, ferner mit den folgenden Schritten:
Bereitstellen einer Liste von Aufenthaltsorten, an denen die Verwendung der Vorrichtung gesteuert werden soll;
Vergleichen der Information bezüglich des Aufenthaltsorts des Geräts mit den Aufenthaltsorten auf der Liste; und
wenn der Aufenthaltsort des Geräts in der Liste vorhanden ist, Erzeugen eines Ergebnisses, das anzeigt, dass die Verwendung der Vorrichtung gesteuert werden soll.

8. Ein Verfahren nach Anspruch 7, wobei die Liste zumindest temporär in dem tragbaren digitalen Gerät gespeichert ist.

9. Ein Verfahren nach Anspruch 7, wobei Daten, die sich auf die Liste beziehen, an das Gerät über das Netzwerk transferiert werden.

10. Ein Verfahren nach Anspruch 2, wobei es sich bei der Verwendung, die kontrolliert ist, um eine Verwendung von einer Anwendung handelt, die auf dem tragbaren Gerät installiert ist, und wobei die Zellenidentität (ID) eine Charakteristik von einer oder mehreren spezifischen Charakteristiken des empfangenen Signals ist.

11. Ein Verfahren nach Anspruch 10, wobei die Steuerung ein Aktivieren oder ein Deaktivieren von zumindest einem Tell der Funktionalität der Anwendung aufweist.

12. Ein Verfahren nach Anspruch 10 oder 11, wobei es sich bei dem empfangenen Signal um ein Signal handelt, das konform mit einem Standard der mobilen Telekommunikation ist, der von dem Gerät unterstützt wird.

13. Ein Verfahren nach einem der Ansprüche 10 bis 12, wobei das Signal von einer Basisstation derart übertragen werden kann, dass die Anwendung in geografischen Gebieten eingeschaltet wird und/oder ausgeschaltet wird.

14. Ein Verfahren nach einem der Ansprüche 10 bis 12, wobei die eine oder mehreren spezifischen Charakteristiken nicht ursprünglich als Schaltsignale für die Anwendung bestimmt sind.

15. Ein Verfahren nach einem der Ansprüche 10 bis 14, wobei die Charakteristiken des Signals empfangen werden und von allen tragbaren Geräten/mobilen Telefonen in netzförmigen Systemen bemerkt werden.

16. Ein Verfahren nach einem der Ansprüche 10 bis 15, wobei es sich bei dem Gebiet, in dem die Anwendung ausgeschaltet wird, um eine Zelle oder Zellen des netzförmigen Telefonsystems handelt, mit denen sich das Telefon verbindet.

17. Ein Verfahren nach einem der Ansprüche 10 bis 16, wobei der Steuerkanal, auf dem die Zellen-ID abgestrahlt wird, ein informationsfeld aufweist, das dazu ausgebildet ist, gesetzt zu werden, um anzuzeigen, ob die Anwendung eingeschaltet oder ausgeschaltet werden soll.

18. Ein Verfahren nach einem der vorhergehenden Ansprüche, wobei eine Basisstation oder Komponenten, die einer Basisstation ähnlich sind, die Zellen bilden, die kleiner sind als herkömmliche Netzwerkzellen, bereitgestellt werden, um relativ kleine Gebiete zu steuern, die nicht mit der netzförmigen Funkstruktur verbunden sind und bei denen es sich nur um Signalfeuer-Sender handelt.

19. Ein Verfahren nach Anspruch 18, wobei das Signalfeuer standardisierte Signale sendet, mit der Ausnahme, dass die Zellenidentität und/oder das Fehlen eines Rückkehrpfads bedeutet, dass tragbare Geräte/mobile Telefone sich dieser Zelle nicht anschließens können.

20. Ein Verfahren nach einem der Ansprüche 18 und 19, wobei alle Signalfeuer-Zellen in einem Netzwerk dieselbe Frequenz und Zellen-ID verwenden, so dass die Verwendung des Spektrums minimiert wird, und dass nur eine Zellen-ID auf den tragbaren Geraten bereitgehalten werden muss, unabhängig davon, wie viele geografische Gebiete gesteuert werden.

21. Ein Verfahren nach einem der Ansprüche 18 bis 20, wobei ein Abschalten eines Signalfeuer-Senders das betroffene Gebiet von einer Gruppe von ausgeschlossenen Gebieten entfernen kann, und zwar ohne dass weitere Änderungen in den Einstellungen des tragbaren Geräts erforderlich sind.

22. Ein Verfahren nach einem der Ansprüche 18 bis 21, wobei das Einschalten und das Ausschalten eines Signalfeuer-Senders bestimmen kann, ob die Anwendung auf dem tragbaren Gerät aktiviert werden soll oder nicht.

23. Ein Verfahren nach einem der Ansprüche 18 bis 22, wobei die Signalfeuer-Sender von mehreren Netzwerken verwendet werden können.

24. Ein Verfahren nach einem der vorhergehenden Ansprüche, wobei die verhinderten Applikationen Fotografie aufweisen.

25. Ein Verfahren nach einem der Ansprüche 18 bis 24, wobei die Signalfeuer-Sender in existierenden Zellen eines GSM-Netzwerks geschaffen/installlert werden, so dass nur ein Verfahren zum Deaktivieren/Aktivieren auf dem tragbaren Gerät implementiert werden muss.

26. Ein Verfahren nach Anspruch 25, wobei das Verfahren dadurch realisiert wird, dass ein zusätzlicher 'Sigmalfeuer'-Steuerkanal BCCH von einer Funkbasisstation gesendet wird.

27. Ein tragbares digitales Gerät in einem Kommunikationsnetzwerk, das tragbare digitale Gerät mit:
einem Empfänger, der dafür ausgebildet ist, ein hemmendes Signal von einem tragbaren Signalfeuer-Sender zu empfangen, der als eine persönliche Hemmeinrichtung einer Person getragen wird;
Mitteln zum Analysieren des hemmenden Signals, um festzustellen, ob eine Verwendung des tragbaren digitalen Geräts gesteuert werden soll; und
Mitteln zum Steuern der Verwendung des tragbaren digitalen Geräts in Abhängigkeit von dem Ergebnis der Analyse, wobei die Mittel zum Steuern dafür ausgebildet sind, Anwendungen des tragbaren digitalen Geräts zumindest teilweise an der Ausführung in der Nähe des tragbaren Signalfeuer-Senders zu hindern.

## Revendications

1. Procédé de commande de l'utilisation d'un dispositif numérique portable dans un réseau de communication, **caractérisé en ce que** le procédé comporte les étapes ci-dessous consistant à :
■ recevoir, au niveau du dispositif, un signal inhibiteur en provenance d'un émetteur de balise portable utilisé en qualité d'inhibiteur personnel d'une personne ;
■ analyser le signal inhibiteur, au niveau du dispositif, pour déterminer si l'utilisation du dispositif devrait être commandée ; et
■ commander l'utilisation du dispositif selon le résultat de l'analyse, moyennant quoi des applications, au niveau du dispositif numérique portable, sont présentées à proximité de la personne où le signal inhibiteur est reçu.

2. Procédé selon la revendication 1, comportant en outre les étapes ci-après consistant à : a) recevoir un signal sur le réseau, au niveau du dispositif, le signal comportant une identité de cellule (10) ; b) analyser l'identité de cellule (10), au niveau du dispositif, en vue de déterminer si l'utilisation du dispositif devrait être commandée ; c) commander l'utilisation du dispositif selon le résultat de l'analyse d'identité de cellule.

3. Procédé selon la revendication 2, dans lequel le signal est un signal standard transmis par un élément de réseau.

4. Procédé selon la revendication 3, dans lequel l'élément de réseau est une station de base.

5. Procédé selon l'une quelconque des revendications précédentes, dans lequel les caractéristiques du signal sont analysées pour déterminer l'emplacement du dispositif.

6. Procédé selon l'une quelconque des revendications précédentes, **caractérisé en ce que** le procédé comporte une étape consistant à délivrer des émetteurs supplémentaires dans le réseau, les émetteurs étant configurés de manière à transmettre des signaux en un format standard, dans lequel la réception de tels signaux au niveau du dispositif est destinée à initier une commande d'utilisation du dispositif.

7. Procédé selon l'une quelconque des revendications précédentes, comprenant en outre les étapes ci-après consistant à :
■ fournir une liste d'emplacements où l'utilisation du dispositif doit être commandée ;
■ comparer les informations concernant l'emplacement du dispositif aux emplacements sur la liste ; et
■ si l'emplacement du dispositif est présent dans la liste, générer un résultat indiquant que l'utilisation du dispositif doit être commandée.

8. Procédé selon la revendication 7, dans lequel la liste est stockée, au moins temporairement, dans le dispositif numérique portable.

9. Procédé selon la revendication 7, dans lequel des données relatives à la liste sont transférées au dispositif sur le réseau.

10. Procédé selon la revendication 2, dans lequel l'utilisation commandée est l'utilisation d'une application installée sur le dispositif portable et l'identification de cellule (ID) est l'une parmi une ou plusieurs caractéristiques spécifiques du signal reçu.

11. Procédé selon la revendication 10, dans lequel l'étape de commande comprend l'étape consistant à activer ou désactiver au moins une partie de la fonctionnalité de l'application.

12. Procédé selon la revendication 10 ou 11, dans lequel le signal reçu est un signal conforme à une norme de télécommunication mobile qui prend en charge le dispositif.

13. Procédé selon l'une quelconque des revendications 10 à 12, dans lequel le signal peut être transmis à partir d'une station de base, de sorte que l'application est mise sous tension et/ou hors tension dans des zones géographiques.

14. Procédé selon l'une quelconque des revendications 10 à 12, dans lequel ladite une ou lesdites plusieurs caractéristiques spécifiques ne sont pas initialement destinées à être des signaux de commutation de l'application.

15. Procédé selon l'une quelconque des revendications 10 à 14, dans lequel les caractéristiques de signal sont reçues et référencées par tous les dispositifs portables / téléphones mobiles sur des systèmes cellulaires.

16. Procédé selon l'une quelconque des revendications 10 à 15, dans lequel la zone dans laquelle l'application est mise hors tension est celle de la ou des cellules de système de téléphone cellulaire à laquelle/auxquelles le téléphone se connecte.

17. Procédé selon l'une quelconque des revendications 10 à 16, dans lequel le canal de commande sur lequel l'identification de cellule est émise inclut un fanion configuré de manière à être défini de façon à indiquer si l'application doit être mise sous tension ou mise hors tension.

18. Procédé selon l'une quelconque des revendications précédentes, dans lequel une station de base ou des éléments de type station de base formant des cellules plus petites que les cellules de réseau conventionnelles est/sont délivré(es) pour commander des zones relativement petites qui ne sont pas connectées à l'infrastructure radio cellulaire et représentent des émetteurs de balise uniquement.

19. Procédé selon la revendication 18, dans lequel la balise émet des signaux standard, en dehors du fait que l'identité de cellule et/ou l'absence d'un chemin de retour indique (nt) que des dispositifs portables / téléphones mobiles ne peuvent pas s'affilier à cette cellule.

20. Procédé selon l'une quelconque des revendications 18 et 19, dans lequel toutes les cellules de balise dans un réseau utilisent la même fréquence et la même identification de cellule, ce qui permet de minimiser l'utilisation spectrale et de ne nécessiter qu'une seule identification de cellule à conserver sur les dispositifs portables, indépendamment du nombre de régions géographiques commandées.

21. Procédé selon l'une quelconque des revendications 18 à 20, dans lequel la mise hors tension d'un émetteur de balise peut supprimer la zone concernée d'un ensemble de zones exclues, sans nécessiter d'autre modification au niveau des paramètres du dispositif portable.

22. Procédé selon l'une quelconque des revendications 18 à 21, dans lequel la mise hors tension et sous tension d'un émetteur de balise peut déterminer si l'application sur le dispositif portable doit être activée ou non.

23. Procédé selon l'une quelconque des revendications 18 à 22, dans lequel les émetteurs de balise peuvent être utilisés par de multiples réseaux.

24. Procédé selon l'une quelconque des revendications précédentes, dans lequel les applications exclues incluent les photographies.

25. Procédé selon l'une quelconque des revendications 18 à 24, dans lequel les émetteurs de balise sont créés/installés sur des cellules de réseau GSM existant, de sorte qu'un seul procédé d'activation / de désactivation doit être mis en oeuvre sur le dispositif portable.

26. Procédé selon la revendication 25, dans lequel ledit procédé est réalisé en transmettant un canal de commande BCCH de "balise" supplémentaire à partir d'une radio de station de base.

27. Dispositif numérique portable dans un réseau de communication, ledit dispositif numérique portable comportant :
✔ un récepteur configuré pour recevoir un signal inhibiteur en provenance d'un émetteur de balise portable utilisé en qualité d'inhibiteur personnel d'une personne ;
✔ un moyen pour analyser le signal inhibiteur en vue de déterminer si l'utilisation du dispositif numérique portable devrait être commandée : et
✔ un moyen pour commander l'utilisation du dispositif numérique portable selon le résultat de l'analyse, ledit moyen pour commander est configuré pour empêcher, au moins partiellement, la mise en oeuvre des applications du dispositif numérique portable à proximité de l'émetteur de balise portable.
